# EUROPÄISCHE PATENTSCHRIFT

(11) **EP 3 431 690 B1**
(45) Veröffentlichungstag und Bekanntmachung des Hinweises auf die Patenterteilung: **14.05.2025**
(21) Anmeldenummer: 18181822.0
(22) Anmeldetag: 05.07.2018
(51) Int. Cl.: E05G 1/024

(54) **EINBRUCHSICHERER TRESOR MIT MEHRSCHICHTIGEM AUFBAU**
INTRUSION-PREVENTING SAFE WITH A MULTI-LAYER STRUCTURE
COFFRE-FORT ANTI-EFFRACTION À CONSTRUCTION MULTICOUCHE

(30) Priorität: 21.07.2017 CN 201710602106
(43) Veröffentlichungstag der Anmeldung: 23.01.2019
(73) Patentinhaber: Tri Star Inc., 226300 Nantong, Jiangsu (CN)
(72) Erfinder: LONG, Mei, Shenyang, 110005 (CN); ZHAO, Zhiming, Nantong, 226300 (CN); GUAN, Zhifeng, Shanghai, 201112 (CN); CHEN, Wenkun, Shanghai, 221206 (CN)
(74) Vertreter: Walther Bayer Faber Patentanwälte PartGmbB

(56) Entgegenhaltungen:
- CN-A- 85 107 644
- CN-U- 202 194 493
- DE-A1- 3 533 555
- DE-U- 1 945 893

## Beschreibung

### Technischer Bereich

Die Erfindung betrifft den Bereich der Konstruktion eines Tresors. Es handelt sich um einen Einbruchsicheren Tresor mit mehrschichtigem Aufbau.

**Technologischer HintergrundJe** höher die Sicherheitsstufe ist, desto besser ist der Einbruchswiderstand. Zu den üblichen Angriffswerkzeugen gehören Trennschleifer, Brennschneidmaschine, Hammer, Schlagbohrer und Schneidbrenner. Um solche Angriffe abwehren zu können muss eine Wand des Tresors relativ dicker gemacht werden. Bei den aktuellen Tresoren in den Sicherheitsstufen CEN III, CEN IV und CEN V beträgt die Wandstärke üblicherweise ≥ 40mm.

Aus der DE 19 45 893 U ist eine mehrschichtige Panzerplatte für Wertbehälter, wie Tresore bekannt. Die Panzerplatte umfasst mindestens eine metallische und eine nichtmetallische Schicht und besteht aus einer Metallplatte aus Flussstahl, einer gegossenen Metallschicht, einer selbstverfestigenden Schicht und einer weiteren Metallplatte aus Flussstahl. Die gegossene Metallschicht besteht insbesondere aus Aluminium und umfasst Einschlüsse aus hochschmelzenen Oxiden und Siliziumkarbid. Die selbstverfestigende Schicht besteht vorteilhafterweise aus Beton und kann Einschlüsse aus hochschmelzenden Oxiden oder auf Siliziumbasis umfassen. Zugewandte Flächen der selbstverfestigenden Schicht und der gegossenen Metallschicht können profiliert ausgestaltet sein, sodass Vorsprünge der Flächen ineinandergreifen.

Aus der CN 202 194 493 U ist ein Aufbau einer Wand für einen Sicherheitsschrank bekannt. Die Wand umfasst eine Stahlplatte und eine Verschleißplatte. Die Verschleißplatte besteht aus einer Karbidlegierung und einer Substratschicht aus einem korrosionsbeständigen Stahl. Eine mit Stahlfasern versetzte Nanozementschicht ist zwischen der Verschleißplatte und der Stahlplatte angeordnet.

Die DE 35 33 555 A1 offenbart die Wandung eines Sicherheitsbehältnisses, insbesondere eines Tresors oder Geldschranks. Die Wandung umfasst eine innere Metallschicht und eine äußere Metallschicht. Zwischen der inneren und äußeren Metallschicht sind parallel verlaufende Rippen angeschweißt. In einem Raum zwischen den Rippen und der äußeren und inneren Metallschicht sind Streifen aus Aluminium mit darin eingebettetem Korund angeordnet.

Aus der CN 85 107 644 A ist ein Tresor mit einer Wand umfassend eine Innenplatte und eine Außenplatte bekannt. Weiter ist die Wand aus einem Kernteil aus einem Substrat und Metallstreifen. Die Streifen sind in Längsrichtung und Querrichtung angeordnet und bilden dabei ein Gitter. Die Streifen sind vorzugsweise miteinander verschweißt sowie auf dem Substrat angeschweißt. In Hohlräume im Gitter zwischen den Streifen wird ein Füllmaterial eingegossen. Zwischen dem Kernmaterial und der Innenplatte und zwischen dem Kernmaterial und der Außenplatte ist jeweils eine Isolationsschicht angeordnet.

### Erfinderische Tätigkeit

Der vorliegenden Erfindung liegt die Aufgabe zugrunde, einen einbruchsicheren Tresor mit mehrschichtigem Aufbau zu schaffen, der durch seine Bauausführung die Wandstärke der Tresore auf ≤40mm reduzieren lässt und den Einbruchschutz EN1143-ICENIII, CENIV, CENV immer noch erreichen kann.

Technisches Konzept dieser Erfindung ist:
Ein einbruchsicherer Tresor mit mehrschichtigem Aufbau, inkl. Korpus, dadurch gekennzeichnet, dass der Korpus in der Reihenfolge von außen nach innen aus den Bestandteilen Außenblech, Verschleißblech, Verbundverstärkungsschicht und Verstärkungsblech besteht, und dass das genannte Außenblech, Verschleißblech, die Verbundverstärkungsschicht und das Verstärkungsblech dicht miteinander verbunden sind.

Vorzugsweise besteht das genannte Außenblech aus Edelstahl oder Kohlenstoffstahl in einer Stärke von 1-5mm. Das genannte Verschleißblech weist eine Stärke von 10-15mm aus. Das genannte Verstärkungsblech besteht aus Edelstahl oder Kohlenstoffstahl in einer Stärke von 2-10mm. Die Verbundverstärkungsschicht besteht aus Siliciumcarbid, Siliziumnitrid, Borcarbid oder Aluminiumoxid in einer Stärke von 5-10mm.

Vorzugsweise ist eine Auflageschicht des Verschleißblechs eng mit einer Innenoberfläche des Außenblechs verbunden, und eine Grundmaterialseite des Verschleißblechs ist eng mit einer Oberfläche der Verbundverstärkungsschicht verbunden.

Erfindungsgemäß besteht die Verbundverstärkungsschicht außerdem aus mehreren miteinander verbundenen kleinen Teilstücken. Zwischen dem Verschleißblech und dem Verstärkungsblech sind mehrere Pfosten untereinander verschweißt. Die genannten kleinen Teilstücke werden in den durch Pfosten gebildeten Formen angeordnet und bilden sich dadurch zu einer Gesamtstruktur. Die Pfosten können als Rippenstähle ausgestaltet sein.

Es kann ferner vorgesehen sein, dass die Wand des genannten Korpus eine Stärke von 25mm aufweist. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Siliciumcarbidschicht besteht aus mehreren kleinen miteinander verbundenen Teilstücken aus Siliciumcarbid in den jeweiligen Maßen 50x50x5mm.

Es kann ferner vorgesehen sein, dass die Wand des genannten Korpus eine Stärke von 25mm aufweist. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Siliziumnitridschicht besteht aus mehreren kleinen miteinander verbundenen Teilstücken aus Siliziumnitrid in den jeweiligen Maßen 50x50x5mm.

Es kann ferner vorgesehen sein, dass die Wand des genannten Korpus eine Stärke von 25mm aufweist. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Borcarbidschicht besteht aus mehreren kleinen miteinander verbundenen Teilstücken aus Borcarbid in den jeweiligen Maßen 50x50x5mm.

Es kann ferner vorgesehen sein, dass die Wand des genannten Korpus eine Stärke von 30mm aufweist. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Aluminiumoxidschicht besteht aus mehreren kleinen miteinander verbundenen Teilstücken aus Aluminiumoxid in den jeweiligen Maßen 50x50x10mm.

### Neuheit

Im Vergleich zu dem aktuellen Stand der Technologie bietet dieser erfindungsgemäße mehrschichtige Tresor starke Angriffsabwehr und hohen Einbruchswiderstand und lässt die Wandstärke der Tresore hoher Sicherheitsstufen wie CEN III, CEN IV, CEN V auf 20-30mm reduzieren. Dadurch lässt er sich auch in enge Platzverhältnisse einbauen. Außerdem kann diese mehrschichtige Verbundkonstruktion auch für dickwandige Tresore zur Verstärkung an bestimmten Stellen verwendet werden.

### Hinweise zu den Zeichnungen

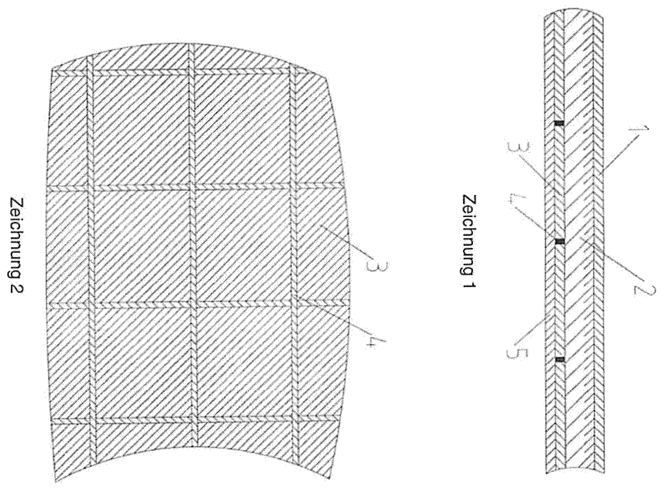

Bei der Zeichnung 1 handelt es sich um einen Seitenschnitt der Erfindung.

Bei der Zeichnung 2 handelt es sich um einen Vertikalschnitt der Erfindung.

Davon, 1. Außenblech, 2. Verschleißblech, 3. Verbundverstärkungsschicht, 4. Pfosten, 5. Verstärkungsblech.

### Ausführungsbeschreibung

Darunter wird es anhand von Ausführungsbeispielen und Zeichnungen mehr auf die Einzelheiten der Erfindung eingehen.

Wie aus der Zeichnung 1 ersichtlich, handelt es sich um einen einbruchsicheren Tresor mit mehrschichtigem Aufbau, inkl. Korpus. Der Korpus besteht in der Reihenfolge von außen nach innen aus den Bestandteilen Außenblech 1, Verschleißblech 2, Verbundverstärkungsschicht 3 und Verstärkungsblech 5. Das genannte Außenblech 1, Verschleißblech 2, die Verbundverstärkungsschicht 3 und das Verstärkungsblech 5 sind dicht miteinander verbunden.

Das mit 1 bezeichnete Außenblech besteht aus Edelstahl oder Kohlenstoffstahl in einer Stärke von 1-5mm. Das mit 2 bezeichnete Verschleißblech weist eine Stärke von 10-15mm auf. Das mit 5 bezeichnete Verstärkungsblech besteht aus Edelstahl oder Kohlenstoffstahl in einer Stärke von 2-10mm. Die mit 3 bezeichnete Verbundverstärkungsschicht besteht aus Siliciumcarbid, Siliziumnitrid, Borcarbid oder Aluminiumoxid in einer Stärke von 5-10 mm.

Die Auflageschicht des mit 2 bezeichneten Verschleißblechs 2 ist eng mit der Innenoberfläche des Außenblechs 1 verbunden, und die Grundmaterialseite des Verschleißblechs 2 ist eng mit der Oberfläche der Verbundverstärkungsschicht 3 verbunden.

Die mit 3 bezeichnete Verbundverstärkungsschicht besteht aus mehreren kleinen miteinander verbundenen Teilstücken.

Des Weiteren besteht die mit 3 bezeichnete Verbundverstärkungsschicht aus mehreren miteinander verbundenen kleinen Teilstücken. Zwischen dem mit 2 bezeichneten Verschleißblech und dem mit 5 bezeichneten Verstärkungsblech sind mehrere mit 4 bezeichneten Pfosten 4 untereinander verschweißt. Die Pfosten 4 können als Rippenstähle ausgestaltet sein. Die genannten Teilstücke werden in den durch Pfosten 4 gebildeten Formen angeordnet und bilden sich dadurch zu einer Gesamtstruktur.

Die genannte Verbundverstärkungsschicht besteht aus Siliciumcarbid, Siliziumnitrid, Borcarbid oder Aluminiumoxid. Die Werkstoffe wie Siliciumcarbid, Siliziumnitrid, Borcarbid und Aluminiumoxid sind sehr spröde und lassen sich bei einem Einbruch z.B. mittels Hammer oder Schlagbohrer leicht durchstoßen. Sie zeigen aber feuerhemmende Wirkung und können großen Widerstand gegen z.B. Brennschneidmaschine und Schneidbrenner leisten. Das Verschleißblech kann Angriffe mit Einbruchwerkzeugen wie Hammer, Schlagbohrer oder Schleifscheibe gut abwehren.

Dadurch, dass die Verbundverstärkungsschicht eng mit der Grundmaterialseite des Verschleißblechs verbunden ist, lässt sich die Verbundverstärkungsschicht bei einem Einbruch von außen dank dem Widerstandswert des Verschleißbleches nicht leicht herausstemmen und zerstören. Gleichzeitig bietet die Verbundverstärkungsschicht mehr Schutz davor, dass das Verschleißblech nicht durchgeschnitten werden kann.

Durch das aufeinander abgestimmte Zusammenwirken kann der gesamte Einbruchschutz vor einem Angriff mit Einbruchswerkzeugen wie Trennschleifer, Brennschneidmaschine, Hammer, Schlagbohrer und Schneidbrenner um das fünf- bis achtfach erhöht und die Wandstärke der Tresore hoher Sicherheitsstufen auf 20-30mm reduziert werden.

### Ausführungsbeispiel 1

Wie aus den Zeichnungen 1-2 ersichtlich, weist die Wand des genannten Korpus eine Stärke von 25mm auf. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Siliciumcarbidschicht besteht aus mehreren kleinen miteinander verbundenen Teilstücken aus Siliciumcarbid in den jeweiligen Maßen 50x50x5mm.

Die genannte Siliciumcarbidschicht besteht aus mehreren kleinen miteinander verbundenen Teilstücken aus Siliciumcarbid. Zwischen dem mit 2 bezeichneten Verschleißblech und mit dem 5 bezeichneten Verstärkungsblech sind mehrere mit 4 bezeichneten Pfosten untereinander verschweißt. Die genannten kleinen Teilstücke aus Siliciumcarbid werden in den durch mit 4 bezeichneten Pfosten gebildeten Formen angeordnet und bilden sich dadurch zu einer Gesamtstruktur.

Nach der Prüfung, wobei das Prüfungsmethode gemäß EN 1143-1:2012 (Wertbehältnisse- Anforderung, Klassifizierung und Prüfungsmethode) durchgeführt wurde, ergeben sich die Messwerte wie folgt in der Tabelle 1.

**Tabelle 1**

| Sicherheitsstufe | Einbruchnorm (112x112mm Loch) | Messwerte | | |
|---|---|---|---|---|
| | | Trennschleifer | Brennschneidmaschine | Schneidbrenner |
| CEN III | 80 RU | ≥ 190 RU | ≥ 180 RU | ≥ 180 RU |
| CEN IV | 120 RU | ≥ 190 RU | ≥ 180 RU | ≥ 180 RU |
| CEN V | 180 RU | ≥ 190 RU | ≥ 180 RU | ≥ 180 RU |

### Ausführungsbeispiel 2

Die Wand des genannten Korpus weist eine Stärke von 25mm auf. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Siliziumnitridschicht besteht aus mehreren kleinen miteinander verbundenen Teilstücken aus Siliciumnitrid in den jeweiligen Maßen 50x50x5mm.

Die genannte Siliziumnitridschicht besteht aus mehreren kleinen miteinander verbundenen Teilstücken aus Siliziumnitrid. Zwischen dem mit 2 bezeichneten Verschleißblech und mit dem 5 bezeichneten Verstärkungsblech sind mehrere mit 4 bezeichneten Pfosten untereinander verschweißt. Die genannten kleinen Teilstücke aus Siliziumnitrid werden in den durch mit 4 bezeichneten Pfosten gebildeten Formen angeordnet und bilden sich dadurch zu einer Gesamtstruktur.

Nach der Prüfung, wobei die Prüfungsmethode gemäß EN 1143-1:2012 (Wertbehältnisse- Anforderung, Klassifizierung und Prüfungsmethode) durchgeführt wurde, ergeben sich die Messwerte wie folgt in der Tabelle 2.

**Tabelle 2**

| Sicherheitsstufe | Einbruchnorm (112x112mm Loch) | Messwerte | | |
|---|---|---|---|---|
| | | Trennschleifer | Brennschneidmaschine | Schneidbrenner |
| CEN III | 80 RU | ≥ 190 RU | ≥ 180 RU | ≥ 180 RU |
| CEN IV | 120 RU | ≥ 190 RU | ≥ 180 RU | ≥ 180 RU |
| CEN V | 180 RU | ≥ 190 RU | ≥ 180 RU | ≥ 180 RU |

### Ausführungsbeispiel 3

Die Wand des genannten Korpus weist eine Stärke von 25mm auf. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Borcarbidschicht besteht aus mehreren kleinen miteinander verbundenen Teilstücken aus Borcarbid in den jeweiligen Maßen 50x50x5mm.

Die genannte Borcarbidschicht besteht aus mehreren kleinen miteinander verbundenen Teilstücken aus Borcarbid. Zwischen dem mit 2 bezeichneten Verschleißblech und mit dem 5 bezeichneten Verstärkungsblech sind mehrere mit 4 bezeichneten Pfosten untereinander verschweißt. Die genannten kleinen Teilstücke aus Borcarbid werden in den durch mit 4 bezeichneten Pfosten gebildeten Formen angeordnet und bilden sich dadurch zu einer Gesamtstruktur.

Nach der Prüfung, wobei das Prüfungsmethode gemäß EN 1143-1:2012 (Wertbehältnisse- Anforderung, Klassifizierung und Prüfungsmethode) durchgeführt wurde, ergeben sich die Messwerte wie folgt in der Tabelle 3.

**Tabelle 3**

| Sicherheitsstufe | Einbruchnorm (112x112mm Loch) | Messwerte | | |
|---|---|---|---|---|
| | | Trennschleifer | Brennschneidmaschine | Schneidbrenner |
| CEN III | 80 RU | ≥ 190 RU | ≥ 180 RU | ≥ 180 RU |
| CEN IV | 120 RU | ≥ 190 RU | ≥ 180 RU | ≥ 180 RU |
| CEN V | 180 RU | ≥ 190 RU | ≥ 180 RU | ≥ 180 RU |

### Ausführungsbeispiel 4

Die Wand des genannten Korpus weist eine Stärke von 25mm auf. Das genannte Außenblech besitzt eine Stärke von 4mm, das genannte Verschleißblech besitzt eine Stärke von 13mm, und das genannte Verstärkungsblech besitzt eine Stärke von 3mm. Die genannte Aluminiumoxidschicht besteht aus mehreren kleinen miteinander verbundenen Teilstücken aus Aluminiumoxid in den jeweiligen Maßen 50x50x5mm.

Die genannte Aluminiumoxidschicht besteht aus mehreren kleinen miteinander verbundenen Teilstücken aus Aluminiumoxid. Zwischen dem mit 2 bezeichneten Verschleißblech und mit dem 5 bezeichneten Verstärkungsblech sind mehrere mit 4 bezeichneten Pfosten untereinander verschweißt. Die genannten kleinen Teilstücke aus Aluminiumoxid werden in den durch mit 4 bezeichneten Pfosten gebildeten Formen angeordnet und bilden sich dadurch zu einer Gesamtstruktur.

Nach der Prüfung, wobei das Prüfungsmethode gemäß EN 1143-1:2012 (Wertbehältnisse- Anforderung, Klassifizierung und Prüfungsmethode) durchgeführt wurde, ergeben sich die Messwerte wie folgt in der Tabelle 4.

**Tabelle 4**

| Sicherheitsstufe | Einbruchnorm (112x112mm Loch) | Messwerte | | |
|---|---|---|---|---|
| | | Trennschleifer | Brennschneidmaschine | Schneidbrenner |
| CEN III | 80 RU | ≥ 120 RU | ≥ 120 RU | ≥ 120 RU |
| CEN IV | 120 RU | ≥ 120 RU | ≥ 120 RU | ≥ 120 RU |

## Patentansprüche

1. Einbruchsicherer Tresor mit mehrschichtigem Aufbau, inkl. Korpus, der Korpus besteht aus den Bestandteilen Außenblech (1), Verschleißblech (2), Verbundverstärkungsschicht (3) und Verstärkungsblech (5), **dadurch gekennzeichnet, dass**
in einer Reihenfolge von außen nach innen das genannte Außenblech (1), Verschleißblech (2), die Verbundverstärkungsschicht (3) und das Verstärkungsblech (5) angeordnet sind, und dass jeweils benachbarte Bestandteile dicht miteinander verbunden sind, und dass
die genannte Verbundverstärkungsschicht (3) aus mehreren kleinen miteinander verbundenen Teilstücken besteht und zwischen dem Verschleißblech (2) und dem Verstärkungsblech (5) mehrere Pfosten (4) untereinander verschweißt sind, und dass die genannten Teilstücke in den durch Pfosten (4) gebildeten Formen angeordnet sind und sich dadurch zu einer Gesamtstruktur bilden.

2. Einbruchsicherer Tresor mit mehrschichtigem Aufbau nach Anspruch 1,
**dadurch gekennzeichnet, dass** das genannte Außenblech (1) aus Edelstahl oder Kohlenstoffstahl in einer Stärke von 1-5mm besteht, und dass das genannte Verschleißblech (2) eine Stärke von 10-15mm aufweist, und dass das genannte Verstärkungsblech (5) aus Edelstahl oder Kohlenstoffstahl in einer Stärke von 2-10mm besteht, und dass die Verbundverstärkungsschicht (3) aus Siliciumcarbid, Siliziumnitrid, Borcarbid oder Aluminiumoxid in einer Stärke von 5-10 mm besteht.

3. Einbruchsicherer Tresor mit mehrschichtigem Aufbau nach Anspruch 1,
**dadurch gekennzeichnet, dass** die Auflageschichte des Verschleißblechs (2) eng mit der Innenoberfläche des Außenblechs (1) verbunden ist, und dass die Grundmaterialseite des Verschleißblechs (2) mit der Oberfläche der Verbundverstärkungsschicht (3) verbunden ist.

4. Einbruchsicherer Tresor mit mehrschichtigem Aufbau nach Anspruch 1, **dadurch gekennzeichnet, dass** die Wand des genannten Korpus eine Stärke von 25mm aufweist und das genannte Außenblech (1) eine Stärke von 4mm besitzt, das genannte Verschleißblech (2) eine Stärke von 13mm besitzt, und das genannte Verstärkungsblech (5) eine Stärke von ≥ 3mm besitzt, wobei die Verbundverstärkungsschicht (4) eine Siliziumcarbidschicht ist und aus mehreren kleinen miteinander verbundenen Teilstücken aus Siliciumcarbid in den jeweiligen Maßen 50x50x5mm besteht.

5. Einbruchsicherer Tresor mit mehrschichtigem Aufbau nach Anspruch 1, **dadurch gekennzeichnet, dass** die Wand des genannten Korpus eine Stärke von 25mm aufweist und das genannte Außenblech (1) eine Stärke von 4mm besitzt, das genannte Verschleißblech (2) eine Stärke von 13mm besitzt, und das genannte Verstärkungsblech (3) eine Stärke von 3mm besitzt und die Verbundverstärkungsschicht (4) eine Siliziumnitridschicht ist und aus mehreren kleinen miteinander verbundenen Teilstücken aus Siliziumnitrid in den jeweiligen Maßen 50x50x5mm besteht.

6. Einbruchsicherer Tresor mit mehrschichtigem Aufbau nach Anspruch 1, **dadurch gekennzeichnet, dass** die Wand des genannten Korpus eine Stärke von 25mm aufweistund das genannte Außenblech (1) eine Stärke von 4mm besitzt, das genannte Verschleißblech (2) eine Stärke von 13mm besitzt, und das genannte Verstärkungsblech (3) eine Stärke von 3mm besitzt und die Verbundverstärkungsschicht (4) eine Borcarbidschicht ist und aus mehreren kleinen miteinander verbundenen Teilstücken aus Borcarbid in den jeweiligen Maßen 50x50x5mm besteht.

7. Einbruchsicherer Tresor mit mehrschichtigem Aufbau nach Anspruch 1, **dadurch gekennzeichnet, dass** die Wand des genannten Korpus eine Stärke von 30mm aufweist und das genannte Außenblech (1) eine Stärke von 4mm besitzt, das genannte Verschleißblech (2) eine Stärke von 13mm besitzt, und das genannte Verstärkungsblech (2) eine Stärke von 3mm besitzt, und wobei die Verbundverstärkungsschicht (4) eine Aluminiumoxidschicht ist und aus mehreren kleinen miteinander verbundenen Teilstücken aus Aluminiumoxid in den jeweiligen Maßen 50x50x10mm besteht.

## Claims

1. Burglar-proof safe with a multilayer structure, including body, the body consisting of the components outer plate (1), wear plate (2), composite reinforcing layer (3) and reinforcing plate (5), **characterized in that**
said outer plate (1), wear plate (2), the composite reinforcing layer (3) and the reinforcing plate (5) are arranged in a sequence from the outside to the inside, and **in that** adjacent components are in each case tightly connected to one another, and **in that**
said composite reinforcing layer (3) consists of a plurality of small sections bonded together and a plurality of posts (4) is welded together between the wear plate (2) and the reinforcing plate (5), and that said sections are arranged in the shapes formed by posts (4) and thereby form an overall structure.

2. Burglar-proof safe with a multilayer structure according to claim 1, **characterized in that** said outer plate (1) is made of stainless steel or carbon steel with a thickness of 1-5 mm, and that said wear plate (2) has a thickness of 10-15 mm, and that said reinforcing plate (5) is made of stainless steel or carbon steel in a thickness of 2-10 mm, and that the composite reinforcing layer (3) is made of silicon carbide, silicon nitride, boron carbide or aluminum oxide in a thickness of 5-10 mm.

3. Burglar-proof safe with a multi-layer structure according to claim 1, **characterized in that** the support layer of the wear plate (2) is closely bonded to the inner surface of the outer plate (1), and **in that** the base material side of the wear plate (2) is bonded to the surface of the composite reinforcing layer (3).

4. Burglar-proof safe with a multilayer structure according to claim 1, **characterized in that** the wall of said body has a thickness of 25 mm and said outer sheet (1) has a thickness of 4 mm, said wear plate (2) has a thickness of 13 mm, and said reinforcing plate (5) has a thickness of 3 mm, wherein the composite reinforcing layer (3) is a silicon carbide layer and consists of several small interconnected pieces of silicon carbide in the respective dimensions 50x50x5 mm.

5. Burglar-proof safe with a multilayer structure according to claim 1, **characterized in that** the wall of said body has a thickness of 25 mm and said outer plate (1) has a thickness of 4 mm, said wear plate (2) has a thickness of 13 mm, said reinforcing plate (5) has a thickness of 3 mm and the composite reinforcing layer (3) is a silicon nitride layer and consists of several small interconnected sections of silicon nitride in the respective dimensions 50x50x5 mm.

6. Burglar-proof safe with a multilayer structure according to claim 1, **characterized in that** the wall of said body has a thickness of 25 mm and said outer plate (1) has a thickness of 4 mm, said wear plate (2) has a thickness of 13 mm, said reinforcing plate (5) has a thickness of 3 mm and said boron carbide layer consists of several small interconnected sections of boron carbide in the respective dimensions 50x50x5 mm.

7. Burglar-proof safe with a multilayer structure according to claim 1, **characterized in that** the wall of said body has a thickness of 30 mm and said outer plate (1) has a thickness of 4 mm, said wear plate (2) has a thickness of 13 mm, said reinforcing plate (5) has a thickness of 3 mm, and said aluminum oxide layer consists of several small interconnected pieces of aluminum oxide in the respective dimensions 50x50x10 mm.

## Revendications

1. Coffre-fort anti-effraction à construction multicouche, comprenant un corps, le corps étant constitué des composants tôle extérieure (1), tôle d'usure (2), couche (3) de renfort composite et tôle de renfort (5), **caractérisé en ce que**
ladite tôle extérieure (1), ladite tôle d'usure (2), la couche (3) de renfort composite et la tôle de renfort (5) sont agencées dans l'ordre de l'extérieur vers l'intérieur, et que les composants adjacents sont respectivement reliés de manière étanche les uns aux autres,
et **en ce que**
ladite couche (3) de renfort composite est constituée de plusieurs petites sections reliées entre elles et plusieurs montants (4) sont soudés entre eux entre la tôle d'usure (2) et la tôle de renfort (5), et que lesdites sections sont agencées selon les formes formées par les montants (4) et forment ainsi une structure globale.

2. Coffre-fort anti-effraction à construction multicouche selon la revendication 1,
**caractérisé en ce que** ladite tôle extérieure (1) est constituée d'acier inoxydable ou d'acier au carbone d'une épaisseur de 1 à 5 mm, et **en ce que** ladite tôle d'usure (2) présente une épaisseur de 10 à 15 mm, et **en ce que** ladite tôle de renfort (5) est constituée d'acier inoxydable ou d'acier au carbone d'une épaisseur de 2 à 10 mm, et **en ce que** la couche (3) de renfort composite est constituée de carbure de silicium, de nitrure de silicium, de carbure de bore ou d'oxyde d'aluminium d'une épaisseur de 5 à 10 mm.

3. Coffre-fort anti-effraction à construction multicouche selon la revendication 1,
**caractérisé en ce que** la couche de support de la tôle d'usure (2) est étroitement liée à la surface intérieure de la tôle extérieure (1), et **en ce que** le côté matériau de base de la tôle d'usure (2) est reliée à la surface de la couche (3) de renfort composite.

4. Coffre-fort anti-effraction à construction multicouche selon la revendication 1,
**caractérisé en ce que** la paroi dudit corps présente une épaisseur de 25 mm et ladite tôle extérieure (1) présente une épaisseur de 4 mm, ladite tôle d'usure (2) présente une épaisseur de 13 mm et ladite tôle de renfort (5) présente une épaisseur de 3 mm, dans lequel la couche (3) de renfort composite est une couche de carbure de silicium et est constituée de plusieurs petites sections de carbure de silicium reliées entre elles, mesurant chacune 50 x 50 x 5 mm.

5. Coffre-fort anti-effraction à construction multicouche selon la revendication 1,
**caractérisé en ce que** la paroi dudit corps présente une épaisseur de 25 mm et ladite tôle extérieure (1) présente une épaisseur de 4 mm, ladite tôle d'usure (2) présente une épaisseur de 13 mm et ladite tôle de renfort (5) présente une épaisseur de 3 mm, et la couche (3) de renfort composite est une couche de nitrure de silicium et est constituée de plusieurs petites sections de nitrure de silicium reliées entre elles, mesurant chacune 50 x 50 x 5 mm.

6. Coffre-fort anti-effraction à construction multicouche selon la revendication 1,
**caractérisé en ce que** la paroi dudit corps présente une épaisseur de 25 mm et ladite tôle extérieure (1) présente une épaisseur de 4 mm, ladite tôle d'usure (2) présente une épaisseur de 13 mm et ladite tôle de renfort (5) présente une épaisseur de 3 mm, et la couche (3) de renfort composite est une couche de carbure de bore et est constituée de plusieurs petites sections de carbure de bore reliées entre elles, mesurant chacune 50 x 50 x 5 mm.

7. Coffre-fort anti-effraction à construction multicouche selon la revendication 1,
**caractérisé en ce que** la paroi dudit corps présente une épaisseur de 30 mm et ladite tôle extérieure (1) présente une épaisseur de 4 mm, ladite tôle d'usure (2) présente une épaisseur de 13 mm et ladite tôle de renfort (5) présente une épaisseur de 3 mm, dans lequel la couche (3) de renfort composite est une couche de d'oxyde d'aluminium et est constituée de plusieurs petites sections d'oxyde d'aluminium reliées entre elles, mesurant chacune 50 x 50 x 5 mm.
